# EUROPÄISCHE PATENTSCHRIFT

(11) **EP 2 795 261 B1**
(45) Veröffentlichungstag und Bekanntmachung des Hinweises auf die Patenterteilung: **06.06.2018**
(21) Anmeldenummer: 12808696.4
(22) Anmeldetag: 30.11.2012
(51) Int. Cl.: G01D 21/02, G01F 1/696, G01F 1/684

(54) **SENSORSYSTEM**
SENSOR SYSTEM
SYSTÈME DE DÉTECTION

(30) Priorität: 23.12.2011 DE 102011089897
(43) Veröffentlichungstag der Anmeldung: 29.10.2014
(73) Patentinhaber: Continental Automotive GmbH, 30165 Hannover (DE)
(72) Erfinder: KNITTEL, Thorsten, 93080 Pentling (DE); SCHÜRER, Stephan, 93051 Regensburg (DE); SETESCAK, Stephen, 93080 Pentling (DE)
(86) Internationale Anmeldenummer: PCT/EP2012/074036
(87) Internationale Veröffentlichungsnummer: WO 2013/092167

(56) Entgegenhaltungen:
- WO-A2-2004/090679
- DE-A1-102009 034 937
- US-A- 6 032 109
- US-A1- 2004 070 495

## Beschreibung

Die Erfindung betrifft ein Sensorsystem mit mindestens einem ersten Sensorelement zur Messung einer ersten physikalischen Größe und einem zweiten Sensorelement zur Messung einer zweiten physikalischen Größe, wobei das erste Sensorelement Bestandteil eines applikationsspezifischen integrierten Schaltkreises ist, der neben dem ersten Sensorelement weitere elektronische Schaltkreise aufweist, und das zweite Sensorelement separat und außerhalb des applikationsspezifischen integrierten Schaltkreises angeordnet ist, wobei das zweite Sensorelement über eine erste Anschlussstelle elektrisch mit dem applikationsspezifischen integrierten Schaltkreis verbunden ist.

Derartige Sensorsysteme werden beispielsweise zur Erfassung des Massenstroms und der Temperatur eines Fluidstromes, insbesondere in der Automobilindustrie, eingesetzt. Dies ist von hoher Bedeutung, da diese physikalischen Größen zur optimierten Steuerung von Verbrennungsmotoren in Kraftfahrzeugen gemessen und verarbeitet werden. Moderne Sensorsysteme verwenden dazu applikationsspezifische integrierte Schaltkreise, auf denen das erste Sensorelement, zum Beispiel das Sensorelement zur Messung des Luftmassenstromes, vollständig integriert ist. Das zweite Sensorelement ist jedoch separat und außerhalb des applikationsspezifischen integrierten Schaltkreises angeordnet, weil es zum Beispiel ungestört vom ersten Sensorelement eine andere physikalische Größe erfassen soll. Beispielhaft wäre hier ein Temperatursensorelement zu nennen, das abseits vom Sensorelement zur Messung des Luftmassenstromes die Temperatur des Luftmassenstromes messen soll. Beide Sensorelemente, also das Sensorelement zur Messung des Luftmassenstromes und das Temperatursensorelement, sind aber Bestandteile des Sensorsystems. Daher ist das zweite Sensorelement, in diesem Beispiel das Temperatursensorelement, über eine erste Anschlussstelle elektrisch mit dem applikationsspezifischen integrierten Schaltkreis verbunden. Der applikationsspezifische integrierte Schaltkreis muss vor der ersten Inbetriebnahme des Sensorsystems programmiert werden. Zur Programmierung wird nach dem Stand der Technik mindestens eine dritte Schnittstelle verwendet, die nach der Programmierung des Sensorsystems nicht weiter benötigt wird. Bei applikationsspezifischen integrierten Schaltkreisen sind gerade die Schnittstellen verhältnismäßig teure Baugruppen, deren Anzahl nach Möglichkeit gering gehalten werden sollte.

US2004/0070495 und US6032109 sind Beispiele von bekannten Sensorsystemen mit Sensorelementen zur Messung von physikalischen Größen, die Bestandteile eines anwendungsspezifischen integrierten Schaltkreises sind, und mit zweiten Sensorelementen zur Messung von physikalischen Größen, die separat und außerhalb des anwendungsspezifischen integrierten Schaltkreises angeordnet sind, wobei verschiedene Anschlussstellen zur Verbindung der zweiten Sensorelemente elektrisch mit dem anwendungsspezifischen integrierten Schaltkreis und zur Programmierung des anwendungsspezifischen integrierten Schaltkreises vorhanden sind.

Der Erfindung liegt daher die Aufgabe zugrunde, ein möglichst einfaches und kostengünstiges Sensorsystem zu schaffen.

Diese Aufgabe wird erfindungsgemäß durch die Merkmale des unabhängigen Anspruchs gelöst. Dadurch, dass der applikationsspezifische integrierte Schaltkreis über die erste Anschlussstelle konfigurierbar ist und das Messsignal des zweiten Sensorelementes über die erste Anschlussstelle auslesbar ist, wird eine Anschlussstelle weniger benötigt. Solange das Sensorsystem programmiert wird, ist es nicht notwendig, Messsignale von dem zweiten Senorelement zu erfassen. Ist die Programmierung des Sensorsystems abgeschlossen, dann kann über die erste Anschlussstelle das Messsignal des zweiten Sensorelementes zu dem applikationsspezifischen integrierten Schaltkreis in dem Sensorsystem übertragen werden.

Bei einer Ausgestaltung der Erfindung ist der anwendungsspezifische integrierte Schaltkreis mit dem ersten Sensorelement und den weiteren elektronischen Schaltkreisen als Mikro-Elektro-Mechanisches-System ausgebildet. Mikro-Elektro-Mechanisches-Systeme sind sehr kostengünstig in hohen Stückzahlen herstellbar und Sensoren, die auf solchen Systemen basieren liefern in der Regel hervorragende Messergebnisse. Dabei ist es Vorteilhaft, wenn das erste Sensorelement als Sensorelement zur Messung eines Luftmassenstroms ausgebildet ist, da die zwei Temperatursensorelemente und das Heizelement des Sensorelementes zur Luftmassenmessung auf einer dünnen Membran des Mikro-ElektroMechanischen-Systems angeordnet sein können, die die elektronische Umgebung hervorragend von der vom Heizelement erzeugt Wärme isoliert.

Wenn das zweite Sensorelement als Sensorelement zur Messung einer Temperatur ausgebildet ist, kann mit diesem Temperaturmesswert eine genauere Auswertung der Information über den Luftmassenstrom erfolgen.

Wenn der mindestens eine Analog-Digital-Wandler auf dem anwendungsspezifischen integrierten Schaltkreis angeordnet ist, kann der Analog-Digital-Wandler praktisch ohne zusätzliche Kosten realisiert werden.

Bei einer vorteilhaften Weiterbildung ist ein Feuchtesensorelement in dem Sensorsystem integriert. Mit dem Feuchtesensorelement kann eine Kompensation der aus der Luftfeuchte resultierenden Fehler bei der Messung des Luftmassenstroms erreicht werden.

Bei einer nächsten Weiterbildung der Erfindung ist ein Drucksensorelement in dem Sensorsystem integriert. Mit dem Drucksensorelement kann eine Kompensation der aus unterschiedlichen Luftdrücken resultierenden Fehler bei der Messung des Luftmassenstroms erreicht werden.

Die Erfindung lässt zahlreiche Ausführungsformen zu. Zur weiteren Verdeutlichung ist die Erfindung in den Zeichnungen näher dargestellt und wird nachfolgend beschrieben. Die Zeichnungen zeigen in:
- Fig. 1: ein Sensorsystem im Konfigurationsfall,
- Fig. 2: ein Sensorsystem im Applikationsfall,
- Fig. 3: ein erfindungsgemäßes Sensorsystem im Konfigurationsfall,
- Fig. 4: ein erfindungsgemäßes Sensorsystem im Applikationsfall,
- Fig. 5: ein erfindungsgemäßes Sensorsystem zur Erfassung des Massenstromes und der Temperatur eines Fluidstromes im Konfigurationsfall, das zusätzlich mit einem Feuchtesensor und einem Drucksensor ausgestattet ist,
- Fig. 6: ein erfindungsgemäßes Sensorsystem zur Erfassung des Massenstromes und der Temperatur eines Fluidstromes im Applikationsfall, das zusätzlich mit einem Feuchtesensor und einem Drucksensor ausgestattet ist.

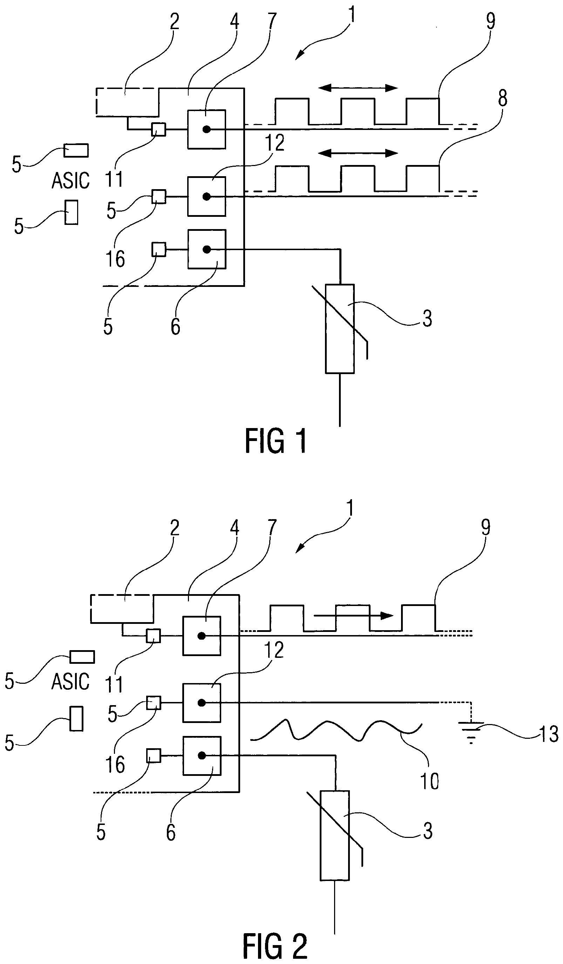

Figur 1 zeigt ein Sensorsystem 1 mit mindestens einem ersten Sensorelement 2 zur Messung einer ersten physikalischen Größe und einem zweiten Sensorelement 3 zur Messung einer zweiten physikalischen Größe. Das erste Sensorelement 2 ist Bestandteil eines anwendungsspezifischen integrierten Schaltkreises 4, der neben dem ersten Sensorelement 2 weitere elektronische Schaltkreise 5 aufweist. Ein zweites Sensorelement 3 ist separat und außerhalb des anwendungsspezifischen integrierten Schaltkreises angeordnet. Das zweite Sensorelement 3 ist über eine erste Anschlussstelle 6 elektrisch mit dem anwendungsspezifischen integrierten Schaltkreis 4 verbunden.

In Figur 1 ist der Konfigurationsfall dargestellt. Zur Konfigurierung oder Programmierung des anwendungsspezifischen integrierten Schaltkreises 4 wird über eine dritte Anschlussstelle 12 ein Konfigurierungssignal 8 gesendet. Mit dem Konfigurierungssignal 8 werden Daten in einen Speicher 16 des anwendungsspezifischen integrierten Schaltkreises 4 geschrieben. Darüber hinaus ist zu erkennen, dass das erste Sensorelement 2 mit einem Analog-Digital-Wandler 11 verbunden ist, der die Messsignale 10 des ersten Sensorelementes 2 digitalisiert und einer zweiten Anschlussstelle 7 zuführt. Dies geschieht jedoch nur im Applikationsfall, also im Fall der Anwendung des Sensorsystems 1 zum Beispiel im Ansaugkanal einer Brennkraftmaschine.

Der Applikationsfall ist in Figur 2 dargestellt. Figur 2 zeigt das aus Figur 1 bekannte Sensorsystem 1, nach dem die Programmierung des anwendungsspezifischen integrierten Schaltkreises 4 ausgeführt ist. Hier ist zu erkennen, dass die dritte Anschlussstelle 12 ihre Funktion verloren hat, wobei sie in der Regel auf ein festes Bezugspotential gesetzt wird. Hier ist das feste Bezugspotential beispielhaft als Masse 13 ausgebildet, es ist aber prinzipiell jedes feste Potential geeignet. Im Applikationsfall erfasst das zweite Sensorelement 3, das separat und außerhalb des anwendungsspezifischen integrierten Schaltkreises 4 angeordnet ist, eine zweite physikalische Größe. In diesem Beispiel ist die von dem zweiten Sensorelement 3 erfasste zweite physikalische Größe die Temperatur eines Luftmassenstroms. Das vom zweiten Sensorelement 3 erzeugte Messsignal 10, das als digitales oder analoges Messsignal 10 vorliegen kann, wird über eine erste Anschlussstelle 6 dem anwendungsspezifischen integrierten Schaltkreis 4 zur Auswertung zugeführt. Zur Auswertung der Messsignale sind auf dem anwendungsspezifischen integrierten Schaltkreis 4 elektronische Schaltkreise 5 ausgebildet. Darüber hinaus erfasst das erste Sensorelement 2, das hier beispielsweise als Sensorelement zur Erfassung eines Luftmassenstromes ausgebildet ist, eine erste physikalische Größe und gibt die Messsignale an einen Analog-Digital-Wandler 11 weiter, der mit einer zweiten Anschlussstelle 7 verbunden ist, über die die Messwerte sowohl des ersten Sensorelementes 2 als auch des zweiten Sensorelementes 3 an eine nachfolgende Motorsteuerung gesendet werden.

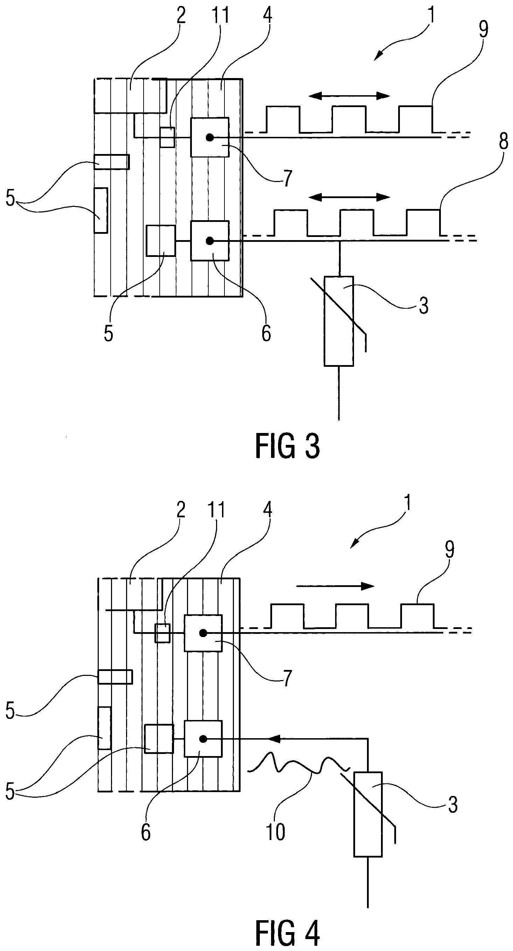

Figur 3 zeigt das erfindungsgemäße Sensorsystem 1. Zu erkennen ist wiederum das erste Sensorelement 2 zur Messung einer ersten physikalischen Größe und das zweite Sensorelement 3 zur Messung einer zweiten physikalischen Größe. Auch in diesem Beispiel ist das erste Sensorelement 2 als Sensorelement zur Messung einer Luftmasse und das zweite Sensorelement 3 als Sensorelement zur Messung der Temperatur der Luftmasse ausgebildet. Das erste Sensorelement 2 ist Bestandteil eines anwendungsspezifischen integrierten Schaltkreises 4. Dieser anwendungsspezifische integrierte Schaltkreis 4 enthält neben dem ersten Sensorelement 2 weitere elektronische Schaltkreise 5. Das zweite Sensorelement 3 ist separat und außerhalb des anwendungsspezifischen integrierten Schaltkreises 4 angeordnet. Das zweite Sensorelement 3 ist über eine erste Anschlussstelle 6 elektrisch mit dem anwendungsspezifischen integrierten Schaltkreis 4 verbunden. Der anwendungsspezifische integrierte Schaltkreis 4 ist über die erste Anschlussstelle 6 konfigurierbar, und das Messsignal 10 des zweiten Sensorelementes 3 ist über die erste Anschlussstelle 6 auslesbar. Als Messsignal 10 ist hier das analoge Signal dargestellt, das vom zweiten Sensorelement 3 erzeugt wird. Im Konfigurationsfall, wie er in Figur 3 dargestellt ist, erzeugt das zweite Sensorelement 3 kein Messsignal 10, und daher kann über die erste Anschlussstelle 6 das Konfigurationssignal 8 an den anwendungsspezifischen integrierten Schaltkreis 4 übertragen werden. Dabei werden die Daten zu einer spezifischen Anwendung in die elektronischen Speicherelemente 16 auf dem anwendungsspezifischen integrierten Schaltkreis 4 eingeschrieben. Wenn die Programmierung des anwendungsspezifischen integrierten Schaltkreises 4 abgeschlossen ist, und dieser damit vollständig konfiguriert ist, kann das zweite Sensorelement 3 über dieselbe erste Anschlussstelle 6 Messsignale 10 an den anwendungsspezifischen integrierten Schaltkreis 4 übertragen. Dies ist in Figur 4 dargestellt.

In den Figuren 3 und 4 ist deutlich zu erkennen, dass zur Programmierung und zur Anwendung des Sensorsystems 1 zumindest eine Anschlussstelle weniger benötigt wird als in den Beispielen aus den Figuren 1 und 2. Damit ist das erfindungsgemäße Sensorsystem 1 kostengünstiger herstellbar und einfacher aufgebaut als das aus den Figuren 1 und 2 bekannte System.

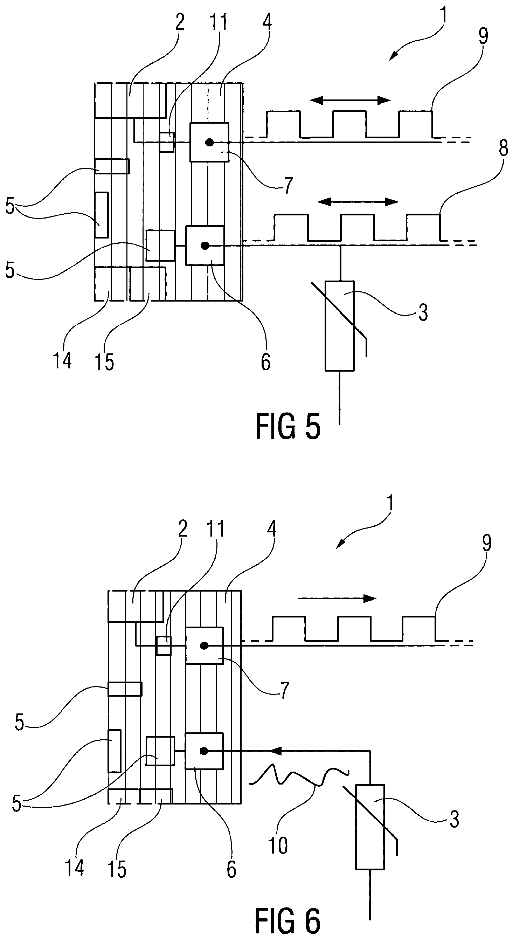

Die Figuren 5 und 6 zeigen die aus den Figuren 4 und 5 bekannten Fälle der Programmierung bzw. Konfiguration und der Applikation des Sensorsystems 1, wobei in den Figuren 4 und 5 das Sensorsystem 1 um ein Feuchtesensorelement 14 und ein Drucksensorelement 15 erweitert wurde. Das Feuchtesensorelement 14 und das Drucksensorelement 15 sind hier beispielhaft mit auf dem applikationsspezifischen integrierten Schaltkreises 4 integriert.

Über alle gezeigten Figuren hinweg sind die erste Anschlussstelle 6, die zweite Anschlussstelle 7 und die dritte Anschlussstelle 12 jeweils als einpolige Anschlussstelle mit jeweils nur einem einzigen Bondpad ausgebildet.

## Patentansprüche

1. Sensorsystem (1) mit einem anwendungsspezifischen integrierten Schaltkreis (4), und mit mindestens einem ersten Sensorelement (2) zur Messung einer ersten physikalischen Größe und einem zweiten Sensorelement (3) zur Messung einer zweiten physikalischen Größe, wobei das erste Sensorelement (2) Bestandteil des anwendungsspezifischen integrierten Schaltkreises (4) ist, der neben dem ersten Sensorelement (2) weitere elektronischer Schaltkreise (5) aufweist, und das zweite Sensorelement (3) separat und außerhalb des anwendungsspezifischen integrierten Schaltkreises (4) angeordnet ist, wobei das zweite Sensorelement (3) über eine erste Anschlussstelle (6) elektrisch mit dem anwendungsspezifischen integrierten Schaltkreis (4) verbunden ist, **dadurch gekennzeichnet, dass** der anwendungsspezifische integrierte Schaltkreis (4) über die erste Anschlussstelle (6) konfigurierbar ist und das Messsignal (10) des zweiten Sensorelementes (3) über die erste Anschlussstelle (6) auslesbar ist.

2. Sensorsystem (1) nach Anspruch 1, **dadurch gekennzeichnet, dass** der anwendungsspezifische integrierte Schaltkreis (4) mit dem ersten Sensorelement (2) und den weiteren elektronischen Schaltkreisen (5) als Mikro-Elektro-Mechanisches-System ausgebildet ist.

3. Sensorsystem (1) nach Anspruch 1 oder 2, **dadurch gekennzeichnet, dass** das erste Sensorelement (2) als Sensorelement zur Messung eines Luftmassenstroms ausgebildet ist.

4. Sensorsystem (1) nach einem der vorgenannten Ansprüche, **dadurch gekennzeichnet, dass** das zweite Sensorelement (3)als Sensorelement zur Messung einer Temperatur ausgebildet ist.

5. Sensorsystem (1) nach einem der vorgenannten Ansprüche, **dadurch gekennzeichnet, dass** der mindestens eine Analog-Digital-Wandler (11) auf dem anwendungsspezifischen integrierten Schaltkreis (4) angeordnet ist.

6. Sensorsystem (1) nach einem der vorgenannten Ansprüche, **dadurch gekennzeichnet, dass** ein Feuchtesensorelement (14) in dem Sensorsystem (1) integriert ist.

7. Sensorsystem (1) nach einem der vorgenannten Ansprüche, **dadurch gekennzeichnet, dass** ein Drucksensorelement (17) in dem Sensorsystem (1) integriert ist.

## Claims

1. Sensor system (1) having an application-specific integrated circuit (4), and having at least one first sensor element (2) for measuring a first physical variable and a second sensor element (3) for measuring a second physical variable, wherein the first sensor element (2) is part of the application-specific integrated circuit (4) that has not only the first sensor element (2) but also further electronic circuits (5), and the second sensor element (3) is arranged separately and outside the application-specific integrated circuit (4), wherein the second sensor element (3) is electrically connected to the application-specific integrated circuit (4) via a first connection point (6), **characterized in that** the application-specific integrated circuit (4) can be configured via the first connection point (6) and the measurement signal (10) from the second sensor element (3) can be read via the first connection point (6).

2. Sensor system (1) according to Claim 1, **characterized in that** the application-specific integrated circuit (4) with the first sensor element (2) and the further electronic circuits (5) is in the form of a microelectromechanical system.

3. Sensor system (1) according to Claim 1 or 2, **characterized in that** the first sensor element (2) is in the form of a sensor element for measuring an air mass flow.

4. Sensor system (1) according to one of the aforementioned claims, **characterized in that** the second sensor element (3) is in the form of a sensor element for measuring a temperature.

5. Sensor system (1) according to one of the aforementioned claims, **characterized in that** the at least one analog-to-digital converter (11) is arranged on the application-specific integrated circuit (4).

6. Sensor system (1) according to one of the aforementioned claims, **characterized in that** a moisture sensor element (14) is integrated in the sensor system (1).

7. Sensor system (1) according to one of the aforementioned claims, **characterized in that** a pressure sensor element (17) is integrated in the sensor system (1).

## Revendications

1. Système capteur (1) comprenant un circuit intégré à application spécifique (4) et comprenant au moins un premier élément capteur (2) destiné à mesurer une première grandeur physique et un deuxième élément capteur (3) destiné à mesurer une deuxième grandeur physique, le premier élément capteur (2) étant un élément constitutif du circuit intégré à application spécifique (4) qui, outre le premier élément capteur (2), possède des circuits électroniques (5) supplémentaires et le deuxième élément capteur (3) étant disposé séparément du circuit intégré à application spécifique (4) et à l'extérieur de celui-ci, le deuxième élément capteur (3) étant relié électriquement au circuit intégré à application spécifique (4) par le biais d'un premier point de raccordement (6), **caractérisé en ce que** le circuit intégré à application spécifique (4) peut être configuré par le biais du premier point de raccordement (6) et le signal de mesure (10) du deuxième élément capteur (3) peut être lu par le biais du premier point de raccordement (6).

2. Système capteur (1) selon la revendication 1, **caractérisé en ce que** le circuit intégré à application spécifique (4), avec le premier élément capteur (2) et les circuits électroniques (5) supplémentaires, est réalisé sous la forme d'un système micro-électromécanique.

3. Système capteur (1) selon la revendication 1 ou 2, **caractérisé en ce que** le premier élément capteur (2) est réalisé sous la forme d'un élément capteur servant à mesurer un débit massique d'air.

4. Système capteur (1) selon l'une des revendications précédentes, **caractérisé en ce que** le deuxième élément capteur (3) est réalisé sous la forme d'un élément capteur servant à mesurer une température.

5. Système capteur (1) selon l'une des revendications précédentes, **caractérisé en ce que** l'au moins un convertisseur analogique/numérique (11) est disposé sur le circuit intégré à application spécifique (4).

6. Système capteur (1) selon l'une des revendications précédentes, **caractérisé en ce qu'**un élément capteur d'humidité (14) est intégré dans le système capteur (1).

7. Système capteur (1) selon l'une des revendications précédentes, **caractérisé en ce qu'**un élément capteur de pression (17) est intégré dans le système capteur (1).
